Europäisches Patentamt

(19) European Patent Office

Office européen des brevets

(11) Publication number: **0 127 594**
**B1**

(12) **EUROPEAN PATENT SPECIFICATION**

(45) Date of publication of patent specification: **21.03.90**

(51) Int. Cl.⁵: **B 23 B 5/16**

(21) Application number: **84830165.1**

(22) Date of filing: **28.05.84**

(54) Automatic device for advancement of revolving mechanical organs.

(30) Priority: **30.05.83 IT 344383**

(43) Date of publication of application:
**05.12.84 Bulletin 84/49**

(45) Publication of the grant of the patent:
**21.03.90 Bulletin 90/12**

(84) Designated Contracting States:
**BE DE FR NL SE**

(56) References cited:
**GB-A- 821 862**
**US-A-1 841 550**
**US-A-1 915 350**
**US-A-3 357 100**
**US-A-3 872 748**
**US-A-3 875 831**
**US-A-3 908 491**
**US-A-4 161 127**
**US-A-4 411 178**

(73) Proprietor: **Ditta O.M.C. s.n.c. di Cavalli Dante &
Walter
Via dell'Artigiano, 11
I-40055 Villanova di Castenaso (Bologna) (IT)**

(72) Inventor: **Cavalli, Walter
Via dell'Artigiano, 11
Villanova di Castenaso Bologna (IT)**

(74) Representative: **Trentini, Ermanno
Studio Brevetti Internazionali Ing. E. Trentini Via
U. Lenzi, 2
I-40122 Bologna (IT)**

Courier Press, Leamington Spa, England.

## Description

This invention refers to a revolving cutting tool. For the sake of simplicity, the tool will be described with reference to a diestock. It can be well seen that this kind of tool lacks advancement motion, which has to be supplied manually by the operator, who is not, however, able to attain the uniformity of pressure needed to obtain a cutting surface perfectly perpendicular to the rotation axis of the piece being machined. Therefore, to be able to use the diestock in work involving greater precision than that currently possible, it becomes necessary to fit an automatic advancement device that makes use of the cutting motion supplied manually by the operator.

Such revolving cutting tools already exist for this purpose as per the description in the introduction of Claim 1 (Patent US—A—3,875,831), which comprise a gear and ratchet to reduce the speed of the advancement motion of the tool which, however, does not assure perfect axiality between tool and the pipe being machined. The purpose of this invention is to provide a way around this obstacle by offering a modified diestock that is as efficient and as precise in terms of axiality as a machine tool with automatic advancement. To obtain this purpose a tool having the features of the characterising part of the claim is provided. The diestock embodying the invention consists of a tool-holder shell, fitted with two manoeuvring arms, the tool-holder shell is cylindrical and vided with revolving cutting means having internal cutting edges that operate externally to the tube being machined and the tool's axial datum is obtained by sliding the tool on a pin, coaxial to the tube, in such a way that the said pin acts as a shaft for the tool itself.

The tool according to the invention consists essentially of a gear wheel, screwed onto the extreme rear of the pin (the moving element), of a cam fitted in front of the wheel (speed reduction element), of a kind of spring latch, fixed to one of the arms and consisting of two ratchet gears, which are integral at 90° and which during machining engage with the cam and the gear wheel. The ratchet fitted axially to the cam transmits the revolving motion of the diestock to the gear wheel only when penetrated by the cam's grooves in a position which enables it at the same time to engage the other ratchet perpendicular to it with the teeth of the gear wheel. The number and shape of the cam grooves make it possible to obtain any speed reduction ratio desired, which may be translated into a variable engagement of the gear wheel, which by pushing the rotation element, coaxial to the pin, brings about the rigid advancement of the tool.

These and other features will become clearer if reference is made to one emodition of the invention which is illustrated for the sake of information in Figures 1—5.

Figure 1 illustrates the modified diestock during machining;

Figure 2 shows the tool in isometric projection;

Figure 3 shows the cam in horizontal projection;

Figure 4 shows the gear wheel in horizontal projection;

Figure 5 illustrates the diestock with an explosion diagram of the advancement device.

In these figures, 1 indicates the tube being machined, 2 the clamping vice, 3 the manoeuvring spanner, 4 the manoeuvring nut which through the axial displacement in both directions of the washer 5 controls the expansion and contraction of the collet 6, which, fitted on the tapering part 7 of the locating pin 8 makes it possible to lock the pin axially to the tube.

9 indicates the forward part of tube which has already been machined by the tool 10, fitted to the modified diestock 11.

12 indicates the manoeuvring arms operated manually by the operator, who in this way gives the device a rotating motion; 13 the elastic latch, which with the action of spring 14 keeps ratchets 15 and 16 reciprocally integral, in their respective grooves 17 and 18, the first of which is located along cam 19, forced to slide axially on the pin without being able to revolve, the second located on the external circumference of the gear wheel 20, which bears a continuous series of grooves that are shaped appropriately for the ratchet 18.

21 indicates the threaded part of the pin on which the gear wheel 20 is screwed, and which is obliged to turn on its thread during the period in which the ratchet 16 remains engaged on one of its teeth, which happens twice during each complete turn of the die.

In the version of the device under consideration here, the cam grooves are arranged at 180° and so it is only when rathet 15 fully penetrates one of them that ratchet 16 is engaged with the gear wheel (thus bringing about a screwing motion of 1/10 of a millimetre for each complete turn). In this way, the gear wheel, by tightening, advances while forcing the sliding cam to move forwards and to act as a stop for the diestock, the tool of which is unable to reverse its direction on the locating pin, which acts as a rigidly fixed tool-holder.

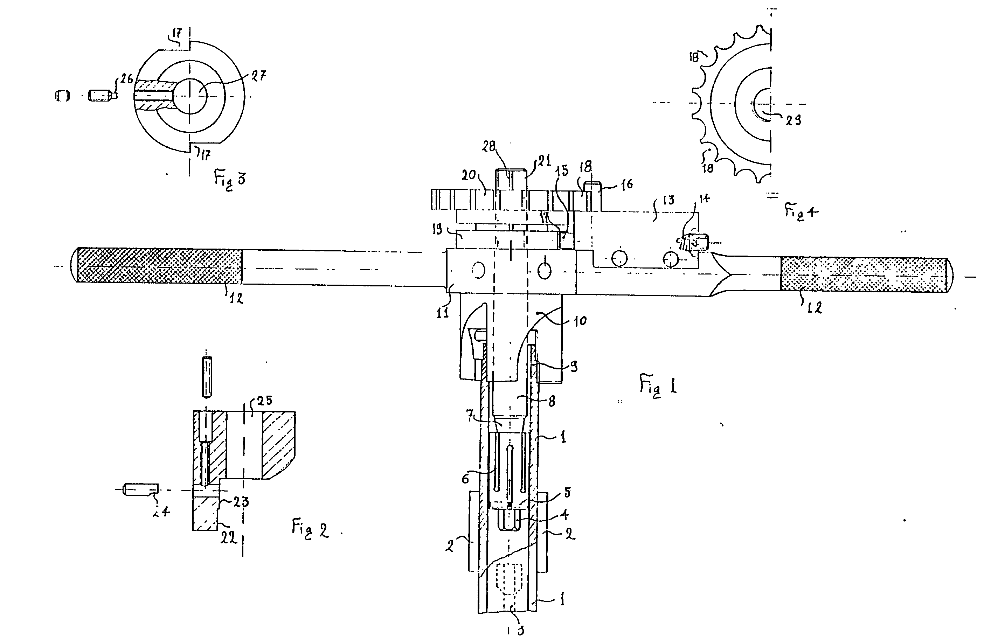

In the Figure 2, 22 indicates the cutting edges of the milling machine used for the more superficial machining of the tube; 23 indicates those for the deeper cycle and 24 the cutter for machining the tube's front parting-off section; 25 indicates the coupling bore with the pin.

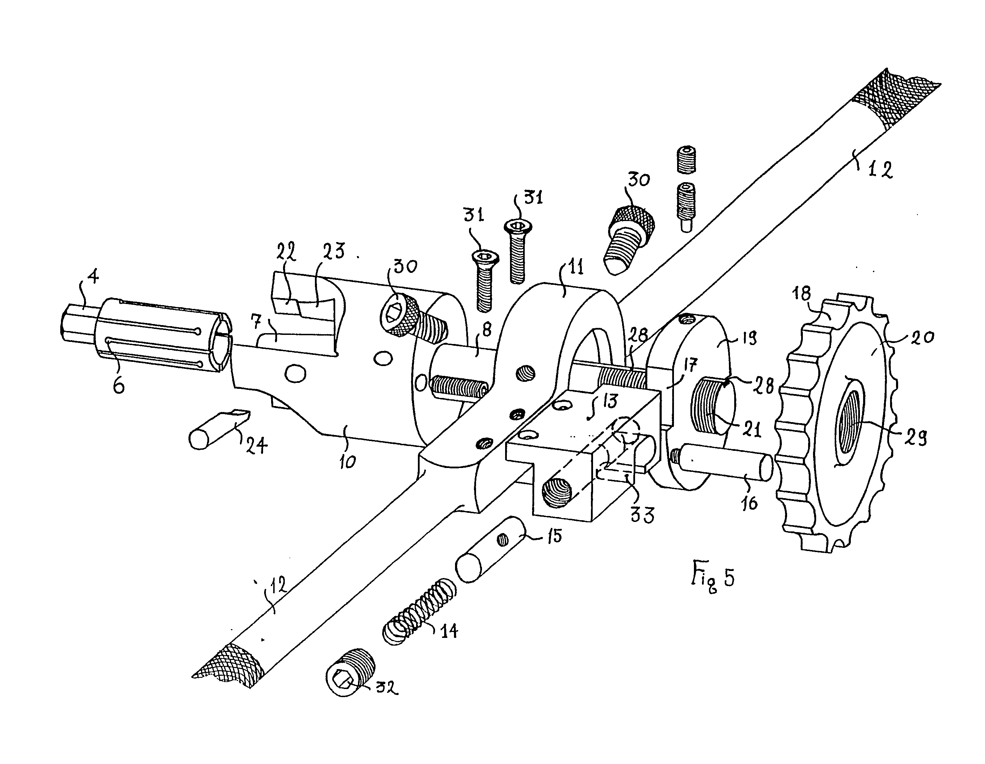

In Figure 3, 26 indicates the guide projection in the coupling bore 27 for the longitudinal groove 28 located on the pin.

In Figure 4, 29 indicates the threaded coupling bore with the threaded part 21 of the pin.

In Figure 5, 30 indicates the tool's lock screws 31 the screws that join in to the arms of the diestock, 32 the compression dowel for spring 14, and 33 the bore shaped in such a way as to keep the latch disengaged while the equipment is being set up.

## Claim

Revolving cutting tool for machining a tube comprising revolving cutting means (22, 23, 24), means for linear advancement of said revolving cutting means (22, 23, 24), locating means (8) to be fixed relative to the tube to be machined, a gear wheel (18), a cam (19), and a coupling element (15, 16) between the gear wheel and the cam, which element rotates with the revolving cutting means, characterized in that the locating means is a shaft (8) having one end for inserting and locking inside the tube to be machined, that the cam (19) is fitted on the shaft free to slide axially but not to rotate relative to the shaft due to the presence of a projection (26) on the cam which penetrates a lengthwise groove (28) of the shft (8), that the gear wheel (18) is threaded onto the shaft, and that the coupling element is engaged with the cam and, at certain angular positions relative to the cam, with the gear wheel, so that when both the cam and the gear wheel are engaged by the coupling element, the gear wheel is rotated in use thereby moving the cutting means in the axial direction of the shaft.

## Patentanspruch

Drehendes Schneidewerkzeug für die Rohrbearbeitung, beinhaltend Vorrichtungen zum Linearvorschub der sich drehenden Schneidevorrichtung (22, 23, 24), Bezugselemente (8), die entsprechend des zu bearbeitenden Rohres festzusetzen sind, ein Zahnrad (18), einen Nocken (19) und ein Kopplungselement (15, 16) zwischen dem Zahnrad und dem Nocken, das sich zusammen mit der sich drehenden Schneidevorrichtung dreht; das Element ist dadurch gekennzeichnet, daß das Bezugselement eine Welle (8) mit einem Ende für die Einstekkung und Befestigung im zu bearbeitenden Rohr besitzt, daß der Nocken (19) auf der Welle montiert ist und axial frei laufen, aber sich dank eines Vorsprunges (26) (auf dem Nocken selbst) nicht bez. der Welle drehen kann—der Vorsprung tritt in eine Längsrille (28) auf der Welle (8) ein—und daß das Kopplungselement sich in den Nocken einfügt und—in gewissen Winkelstellungen gegenüber dem Nocken—sich so mit dem Zahnrad einsteckt, daß, wenn der Nocken und das Zahnrad vom Kopplungselement eingefügt werden, das Zahnrad sich dreht und dadurch die Bewegungen des Schneideelementes einwandfrei in Axialrichtung der Welle entstehen.

## Revendication

Outil trancheur rotatif pour l'usinage des tuubes comportant des moyens d'avance linéaire du dispositif rotatif tranchant (22, 23, 24), des éléments de repère (8) à fixer en fonction du tube à usiner, une roue à engrenages (18), une came (19) et un élément d'accouplement (15, 16) entre la roue dentée et la came, qui tourne avec le dispositif tranchant rotatif, caractérisé en ce que l'élément de repère est un arbre (8) dont une extrémité est emmanchée et fixée à l'intérieure du tube à usiner, que la came (19) est montée sur l'arbre et est libre de se déplacer axialement mais pas de tourner avec l'arbre en raison d'une butée (26) (prévue sur la came) pénétrant dans une rainure longitudinale (28) de l'arbre (8) et que l'élément d'accouplement est emmanché dans la came et avec le roue dentée dans certaines positions angulaires par rapport à la came, de sorte que lorsque la came et la roue dentée sont embrayées par l'élément d'accouplement, la roue dentée tourne déterminant ainsi les mouvements de l'élément tranchant dans une direction de l'arbre parfaitement axiale.

EP 0 127 594 B1

Fig 4

Fig 1

Fig 2

Fig 3

1

Fig 5